# EUROPÄISCHE PATENTSCHRIFT

(11) **EP 4 401 920 B1**
(45) Veröffentlichungstag und Bekanntmachung des Hinweises auf die Patenterteilung: **26.08.2026**
(21) Anmeldenummer: 22782492.7
(22) Anmeldetag: 14.09.2022
(51) Int. Cl.: B24B 5/40, F16L 55/28

(54) **VORRICHTUNG FÜR KANALROHRARBEITEN**
DEVICE FOR SEWAGE PIPE WORK
DISPOSITIF POUR TRAVAIL SUR CANALISATION D'EAUX USÉES

(30) Priorität: 15.09.2021 DE 102021004677
(43) Veröffentlichungstag der Anmeldung: 24.07.2024
(73) Patentinhaber: Rausch Rehab GmbH, 87509 Immenstadt i. Allgäu (DE)
(72) Erfinder: BUHMANN, Heiko, 87474 Buchenberg (DE); NIEDING, Tim, 87509 Immenstadt (DE)
(74) Vertreter: Müller-Boré & Partner Patentanwälte PartG mbB
(86) Internationale Anmeldenummer: PCT/EP2022/075491
(87) Internationale Veröffentlichungsnummer: WO 2023/041561

(56) Entgegenhaltungen:
- EP-A1- 0 326 156
- EP-A1- 0 618 398
- EP-A1- 0 853 211
- EP-A2- 2 659 990
- EP-A2- 2 769 790
- WO-A1-93/05334
- DE-A1- 19 714 463
- DE-U1- 8 400 322
- FR-A1- 2 877 071
- KR-B1- 101 719 362
- US-A- 4 785 512
- US-A- 4 819 721

## Beschreibung

Die vorliegende Erfindung betrifft eine Vorrichtung für Kanalrohrarbeiten, insbesondere für Kanalrohrsanierungs- und Kanalrohrinspektionsarbeiten.

Fernsteuerbare Vorrichtungen für Kanalrohrarbeiten, sogenannte Kanalroboter, werden beispielsweise zur grabenlosen Sanierung und Inspektion von Wasser- und Abwasserohrkanälen oder anderweitigen Rohrleitungen eingesetzt.

Derartige Vorrichtungen umfassen typischerweise eine Basiseinheit, an welcher ein sich um eine Drehachse drehbarer Drehkopf angeordnet ist. An dem Drehkopf sind meist zwei mit einer Arbeitsvorrichtung, beispielsweise einem Fräskopf, verbundene sich parallel zueinander erstreckende, drehbar gelagerte Hubarme angeordnet. Die beiden Hubarme sind in der Regel über einen Aktuator, beispielsweise einen Hydraulikzylinder, bewegbar. Zudem ist die Arbeitsvorrichtung drehbar an den Hubarmen gelagert. Dementsprechend können derartige Vorrichtungen mindestens drei Gelenke aufweisen, mittels welcher die Arbeitsvorrichtung in die gewünschte Position gesteuert werden kann. Die Vorrichtungen umfassen ferner eine schwenkbare Kamera, mittels welcher beispielsweise Wasser- oder Abwasserrohrkanäle inspiziert und die entsprechend auszuführenden Sanierungs- oder Reparaturarbeiten überwacht werden können. Zum Betrieb der Arbeitsvorrichtung und der schwenkbaren Kamera sind entsprechende Leitungen, insbesondere Energieversorgungs- und/oder Datenleitungen, notwendig. Diese Leitungen sind aufgrund der Vielzahl von Gelenken freiliegend ausgebildet und befinden sich in der Regel entweder zwischen den beiden sich parallel zueinander erstreckenden Hubarmen oder sind unterhalb, oberhalb oder neben den Hubarmen angeordnet.

Als besonders problematisch hat sich einerseits herausgestellt, dass während der Kanalarbeiten der Vorrichtung, insbesondere von Vorrichtungen für Kanalrohrarbeiten, bei welchen ein oder mehrere Aktuatoren als Hydraulikzylinder ausgestaltet sind, die zum Betrieb und der Bewegung der Arbeitsvorrichtung und der Kamera notwendigen freiliegenden Leitungen dazu führen können, dass sich die Vorrichtung an in den Rohrleitungen befindlichen Hindernissen, wie Baumwurzeln, Steinen oder dergleichen verfängt und die freiliegenden Leitungen dadurch im schlimmsten Fall beschädigt werden können. Andererseits konnte festgestellt werden, dass die Leitungen das Sichtfeld der Kamera oftmals einschränken, so dass ein Überwachen der Kanalrohrarbeiten nicht für alle von der Kamera erfassbaren Bereiche ermöglicht wird.

Ferner ist aus der KR 101 719 362 B1 ein Kanalisationsroboter gemäß dem Oberbegriff des Anspruchs 1 bekannt, der in der Lage ist, seine Leistung und Funktion zu verbessern, indem er anhaftende Substanzen zerkleinert, die sich über einen langen Zeitraum unter verschiedenen Arten von Fremdmaterialien, die in der zu entfernenden Kanalisation erzeugt werden, abgelagert und verfestigt haben. Ein Rahmenbefestigungsgehäuse ist in einem Körperrahmen ausgebildet, der Vorderräder und Hinterräder enthält. Innerhalb des Rahmenbefestigungsgehäuses sind ein drehbares Innengehäuse und eine Gelenkeinheit ausgebildet. Eine Arbeitskopfeinheit ist in einer Kopfeinheitskupplungseinheit montiert, die an einem von der Gelenkeinheit entfernten Teil in einem vorbestimmten Abstand an einer Vorderseite ausgebildet ist. Eine Quereinstellvorrichtung, eine Vertikaleinstellvorrichtung und eine Dreheinstellvorrichtung sind zwischen einer Armplatte, der Gelenkeinheit und dem Innengehäuse installiert. Eine autonome Drucklufterzeugungseinrichtung ist im Inneren des Innengehäuses installiert. Ein flexibler Schlauch ist zwischen der autonomen Drucklufterzeugungseinrichtung und der Arbeitskopfeinheit angeschlossen. Ein Hammerzylinder und ein innerer Kolbenhammer des Hammerzylinders sind in der Kopfeinheit installiert. In einem unteren Teil der Kopfeinheit ist ein Zertrümmerungsschlagbolzen ausgebildet.

Die US 4 819 721 A betrifft weiter ein ferngesteuertes, hydraulisch betriebenes Schneidgerät zur Verwendung in einer Rohrleitung. Das Schneidgerät umfasst eine Steuertafel zur Erzeugung einer Vielzahl von Steuersignalen zur Steuerung des Betriebs und eine Quelle für unter Druck stehendes Hydraulikfluid.

Die FR 2 877 071 A1 betrifft einen Roboter mit einer Untersuchungseinheit, die an einem Rahmen befestigt ist und eine Gabelbefestigung umfasst, die einen Manipulatorarm gelenkig hält. Ein Zubehörteil, z.B. ein pneumatischer Fräskopf, ist am freien Ende des Arms montiert. Eine Handhabungseinheit bewegt den Arm in einer mittleren Ebene, um das Zubehörteil in Querrichtung zu bewegen. Die Handhabungseinheit ist in Längsrichtung angeordnet und ihr Antriebsmotor befindet sich im Körper des Roboters.

Die EP 0 618 398 A1 betrifft eine Vorrichtung zum Bearbeiten der Innenoberfläche einer nichtbegehbaren Rohrleitung. Ein in der Rohrleitung fahrbares Fahrzeug enthält eine drehbar gelagerte Welle, die eine Bearbeitungseinrichtung trägt. Gemäß der Erfindung sind zur Übertragung der Versorgung dieser Bearbeitungseinrichtung erforderlichen Betriebsmedien in einer Gehäuseschale des Fahrzeugs angeordnete Kanäle vorgesehen, die über Drehdurchführungen an drehfest mit der Bearbeitungseinrichtung verbundene Leitungen angeschlossen sind. Durch diese Maßnahme ist ein Verwickeln der zur Bearbeitungsvorrichtung führenden Versorgungsleitungen praktisch ausgeschlossen

Eine Aufgabe der vorliegenden Erfindung ist es daher eine neuartige Vorrichtung für Kanalrohrarbeiten bereitzustellen, welche einen verbesserten Schutz für Leitungen von Komponenten der Vorrichtung gewährleistet.

Diese Aufgabe wird durch eine Vorrichtung für Kanalrohrarbeiten mit den Merkmalen des unabhängigen Anspruchs gelöst. Bevorzugte Ausführungsformen und spezielle Ausgestaltungen der erfindungsgemäßen Vorrichtung sind in den abhängigen Ansprüchen definiert.

Die erfindungsgemäße Vorrichtung für Kanalrohrarbeiten, insbesondere für Kanalrohrsanierungs- und Kanalrohrinspektionsarbeiten, umfasst die Merkmale des Anspruchs 1.

Die erfindungsgemäße Vorrichtung ermöglicht auf vorteilhafte Weise, dass in zu sanierenden oder zu reparierenden Kanalrohrleitungen befindliche Hindernisse, beispielsweise Baumwurzeln oder größere Ablagerungsprodukte, wie Steine oder dergleichen, nicht dazu führen, dass sich die Vorrichtung aufgrund der mit der Arbeitsvorrichtung verbindbaren Leitung bzw. freiliegender äußerer Abschnitte des dem ersten Aktuator zugeordneten Arbeitskreislaufs in diesen Hindernissen verfängt oder die Leitung bzw. der Arbeitskreislauf beschädigt wird. Vielmehr können lediglich die im Vergleich zur mit der Arbeitsvorrichtung verbindbaren Leitung robusteren Außenflächen der Vorrichtung mit von in der Rohrleitung befindlichen Hindernissen in Kontakt geraten, wohingegen die mit Arbeitsvorrichtung verbindbare Leitung bzw. der Arbeitskreislauf des ersten Aktuators geschützt bleibt.

Im Rahmen der vorliegenden Erfindung bedeutet der Wortlaut "das sich eine mit einer Komponente der Vorrichtung verbindbare oder zugehörige Leitung der Vorrichtung, innerhalb der Vorrichtung erstreckt", dass diese Leitung entlang ihrer Verlaufsrichtung ausgehend vom Inneren der Basiseinheit bis zum Inneren der Komponente in jedem Leitungsquerschnitt senkrecht zur Verlaufsrichtung in Bezug auf ein mit dem Leitungsquerschnitt verbundenes kartesisches Koordinatensystem, dessen Nullpunkt im Mittelpunkt des Leitungsquerschnitts liegt, aus mindestens drei Koordinatenrichtungen, bevorzugt aus allen vier Koordinatenrichtungen, von der Vorrichtung umschlossen ist. Gleiches gilt für einen einem Aktuator der Vorrichtung zugeordneten Arbeitskreislauf. Mit anderen Worten, erstreckt sich beispielsweise die mit der Arbeitsvorrichtung verbindbare Leitung zumindest teilweise entlang des ersten Hubarms, so kann der erste Hubarm z.B. in einem Teilbereich so ausgestaltet sein, dass der Leitungsquerschnitt (eine X-Y-Schnittfläche) der besagten Leitung beispielsweise mindestens in positiver und negativer X-Richtung (von links und rechts) und in positiver Y-Richtung (von oben) von Seitenflächen des ersten Hubarms der Vorrichtung umschlossen ist. Der erste Hubarm kann in einem Teilbereich bevorzugt jedoch auch so ausgestaltet sein, dass der Leitungsquerschnitt der besagten Leitung jeweils in positiver und negativer X- und Y-Richtung (von links, rechts, oben und unten) von Seitenflächen des ersten Hubarms umschlossen ist. Um den größtmöglichen Schutz für die besagte Leitung zu gewährleisten ist die Leitung also bevorzugt ausgehend vom Inneren der Basiseinheit bis zum Inneren der entsprechenden Komponente vollständig von der Vorrichtung umschlossen. Wie bereits erwähnt, gilt Gleiches für einen einem Aktuator der Vorrichtung zugeordneten Arbeitskreislauf.

Ganz allgemein kann die erfindungsgemäße Vorrichtung in Gelenkbereichen, also in Bereichen in denen zwei miteinander gekoppelte Komponenten der Vorrichtung relativ zueinander bewegbar sind, jeweils eine Drehdurchführung aufweisen. Die jeweilige Drehdurchführung kann derart eingerichtet sein, dass eine der beiden Komponenten an der anderen Komponente drehbar gelagert wird und gleichzeitig die zwischen den beiden Komponenten verlaufende Leitung und/oder der zwischen den beiden Komponenten verlaufende Arbeitskreislauf aufgenommen wird und/oder die Drehdurchführung einen Teilabschnitt der zwischen den beiden Komponenten verlaufenden Leitung und/oder des Arbeitskreislaufes bildet. Dazu kann die Drehdurchführung als zylinderförmiger Hohlkörper ausgestaltet sein und entlang ihrer Außenumfangsfläche zumindest abschnittsweise eine oder mehrere Ausnehmungen aufweisen. Im Falle einer zwischen den Komponenten verlaufenden Leitung kann zur Realisierung größerer Drehwinkel der drehbar gelagerten Komponente die Drehdurchführung mit Schleifringen ausgestaltet sein.

Gemäß einer bevorzugten Ausführungsform kann der erste Aktuator ein erster Hydraulikzylinder und der dem ersten Aktuator zugeordnete Arbeitskreislauf ein Hydraulikkreislauf sein. Eine Ausgestaltung des ersten Aktuators als Hydraulikzylinder ist besonders dann sinnvoll, wenn besonders hohe Kräfte auf die Arbeitsvorrichtung wirken sollen bzw. mittels der Arbeitsvorrichtung besonders hohe Kräfte auf eine Kanalrohrwand ausgeübt werden sollen, beispielsweise beim Fräsen der Kanalrohrwand, welche mittels eines elektrischen Aktuators nicht oder nur schwer erzeugt werden können. Der sich dem ersten Hydraulikzylinder zugeordnete Hydraulikkreislauf, welcher sich ausgehend vom Inneren der Basiseinheit bis zum Inneren des ersten Hydraulikzylinders innerhalb der Vorrichtung erstreckt, kann einen Hydraulikflüssigkeitstank, eine Hydraulikpumpe und eine oder mehrere Hydraulikventile umfassen, welche jeweils bevorzugt innerhalb der Basiseinheit angeordnet sind.

Der dem ersten Hydraulikzylinder zugeordnete Hydraulikkreislauf kann sich ausgehend vom Inneren der Basiseinheit über den Drehkopf bis zum Inneren des am Drehkopf drehbar gelagerten ersten Hydraulikzylinders, d.h. innerhalb der Vorrichtung, erstrecken. Dazu kann die erfindungsgemäße Vorrichtung in den Gelenkbereichen zwischen der Basiseinheit und dem Drehkopf sowie zwischen dem Drehkopf und dem erstem Hydraulikzylinder jeweils mit einer Drehdurchführung ausgestaltet sein, welche eingerichtet ist, Hydraulikflüssigkeit des dem ersten Hydraulikzylinders zugeordneten Hydraulikkreislaufes zu transportieren.

Dadurch wird ermöglicht, dass lediglich die robusten Außenflächen der erfindungsgemäßen Vorrichtung mit in den zu sanierenden oder reparierenden Kanalrohrleitungen befindlichen Hindernissen, wie Baumwurzeln oder Steinen, in Kontakt geraten können und der dem ersten Hydraulikzylinder zugeordnete Hydraulikkreislauf vor Beschädigungen geschützt wird. Zudem wird durch die erfindungsgemäße Vorrichtung verhindert, dass sich die Vorrichtung nicht durch außenliegende Schläuche des dem ersten Hydraulikzylinders zugeordneten Hydraulikkreislaufs an in den Kanalrohrleitungen befindlichen Hindernissen verfängt.

Bevorzugt kann die erfindungsgemäße Vorrichtung zudem einen am Drehkopf drehbar gelagerten zweiten Aktuator umfassen, welcher eingerichtet ist, den Aufnahmeabschnitt zu bewegen. In diesem Zusammenhang kann die Vorrichtung zudem einen dem zweiten Aktuator zugeordneten Arbeitskreislauf aufweisen, welcher sich ausgehend vom Inneren der Basiseinheit bis zum Inneren des zweiten Aktuators innerhalb der Vorrichtung erstreckt.

Gemäß einer bevorzugten Ausgestaltung kann der zweite Aktuator ein zweiter Hydraulikzylinder und der dem zweiten Aktuator zugeordnete Arbeitskreislauf ein Hydraulikkreislauf sein.

Um den ersten Hubarm zu bewegen, kann der erste Aktuator beispielsweise über einen Tragabschnitt mit dem ersten Hubarm verbunden sein. Demgegenüber kann der zweite Aktuator mit dem drehbar am ersten Hubarm gelagerten Aufnahmeabschnitt verbunden sein, um den Aufnahmeabschnitt und damit die an dem Aufnahmeabschnitt aufnehmbare Arbeitsvorrichtung, beispielsweise einen entsprechenden Motor inklusive Fräskopf, zu bewegen. Der dem zweiten Aktuator zugeordnete Arbeitskreislauf kann analog zum dem ersten Aktuator zugeordneten Kreislauf ausgestaltet sein. Dies gilt insbesondere dann, wenn die genannten Aktuatoren jeweils als Hydraulikzylinder ausgestaltet sind.

Ganz allgemein kann der dem zweiten Aktuator zugeordnete Arbeitskreislauf sich ausgehend vom Inneren der Basiseinheit über den Drehkopf bis zum Inneren des am Drehkopf drehbar gelagerten zweiten Aktuators, d.h. innerhalb der Vorrichtung, erstrecken. Dazu kann die erfindungsgemäße Vorrichtung in den Gelenkbereichen zwischen der Basiseinheit und dem Drehkopf und zwischen dem Drehkopf und dem zweiten Aktuator jeweils mit einer Drehdurchführung ausgestaltet sein, welche eingerichtet ist, einen Teilabschnitt des dem zweiten Aktuator zugeordneten Arbeitskreislaufs zu bilden.

Im Falle der Ausgestaltung des zweiten Aktuators als zweiter Hydraulikzylinder kann der dem zweiten Hydraulikzylinder zugeordnete Hydraulikkreislauf sich ausgehend vom Inneren der Basiseinheit über den Drehkopf bis zum Inneren des am Drehkopf drehbar gelagerten zweiten Hydraulikzylinders, d.h. innerhalb der Vorrichtung, erstrecken. Dazu kann die erfindungsgemäße Vorrichtung im den Gelenkbereichen zwischen der Basiseinheit und dem Drehkopf und zwischen dem Drehkopf und dem zweiten Hydraulikzylinder jeweils mit einer Drehdurchführung ausgestaltet sein, welche eingerichtet ist, Hydraulikflüssigkeit des zweiten Hydraulikkreislaufes zu transportieren.

Dadurch wird ermöglicht, dass lediglich die robusten Außenflächen der erfindungsgemäßen Vorrichtung mit in den zu sanierenden oder reparierenden Kanalrohrleitungen befindlichen Hindernissen, wie Baumwurzeln oder Steinen, in Kontakt geraten können und der dem zweiten Hydraulikzylinder zugeordnete Hydraulikkreislauf vor Beschädigungen geschützt wird. Zudem wird durch die erfindungsgemäße Vorrichtung verhindert, dass sich die Vorrichtung nicht durch außenliegende Schläuche des dem zweiten Hydraulikzylinders zugeordneten Hydraulikkreislaufs an in den Kanalrohrleitungen befindlichen Hindernissen verfängt. Genauer ist innerhalb der Basiseinheit eine dem Drehkopf zugeordnete erste

Drehdurchführung angeordnet, welche einen Teilabschnitt des dem ersten Hydraulikzylinder zugeordneten Hydraulikkreislaufs bildet. Dazu kann die erste Drehdurchführung in einem Übergangsbereich zwischen dem Drehkopf und der Basiseinheit korrespondierend zur Drehachse des Drehkopfes angeordnet sein. Die erste Drehdurchführung kann einem Hydraulikventil des dem ersten Hydraulikzylinders zugeordneten Hydraulikkreislaufes nachgeschaltet sein. Die erste Drehdurchführung kann zudem einen zylindrischen Innenabschnitt und einen zylindrischen Außenabschnitt aufweisen, welche sich jeweils entlang der Drehachse des Drehkopfes erstrecken. Der zylindrische Innenabschnitt der ersten Drehdurchführung kann statisch ausgebildet sein. In diesem Fall ist der zylindrische Außenabschnitt um die Drehachse des Drehkopfes drehbar. Auch eine entsprechend umgekehrte Ausgestaltung mit sich drehbarem zylindrischen Innenabschnitt und statischem zylindrischen Außenabschnitt ist denkbar. Der zylindrische Innenabschnitt und/oder der zylindrische Außenabschnitt können entlang ihrer Umfangsfläche eine oder mehrere Ausnehmungen aufweisen, welche eingerichtet sind, Hydraulikflüssigkeit des dem ersten Hydraulikzylinder zugeordneten Hydraulikkreislaufes zu transportieren. Je nach Ausgestaltung des zylindrischen Innenabschnitts und des zylindrischen Außenabschnitts kann die erste Drehdurchführung mit der einen oder den mehreren Ausnehmungen korrespondierende Bohrungen aufweisen, welche ebenfalls eingerichtet sind, die Hydraulikflüssigkeit des dem ersten Hydraulikzylinder zugeordneten Hydraulikkreislaufes zu transportieren.

Vorzugsweise bildet in diesem Zusammenhang die erste Drehdurchführung zudem einen Teilabschnitt des dem zweiten Hydraulikzylinder zugeordneten Hydraulikkreislaufs. Dazu kann die erste Drehdurchführung eine oder mehrere weitere Ausnehmungen in dem zylindrischen Innenabschnitt und/oder dem zylindrischen Außenabschnitt umfassen. Zudem kann die erste Drehdurchführung eine oder mehrere mit der einen oder den mehreren weiteren Ausnehmungen korrespondierende Bohrungen aufweisen, so dass Hydraulikflüssigkeit des dem zweiten Hydraulikzylinder zugeordneten Hydraulikkreislaufs innerhalb der ersten Drehdurchführung transportiert werden kann.

Durch eine derartige Ausgestaltung kann auf konventionell verwendete den Hydraulikzylindern zugehörige außenliegende Hydraulikschläuche verzichtet werden. Dadurch kann gewährleistet werden, dass sich die erfindungsgemäße Vorrichtung nicht während des Betriebs innerhalb der Kanalrohrleitungen infolge außenliegender Hydraulikschläuche an Hindernissen festfährt oder verfängt.

In einer alternativen Ausführungsform, welche nicht unter die beanspruchte Erfindung fällt, können der erste Aktuator und/oder der zweite Aktuator auch als elektrisch betriebene Aktuatoren ausgebildet sein. In diesem Fall kann der entsprechend zugehörige Arbeitskreislauf als elektrische Leitung ausgestaltet sein, welche sich jeweils innerhalb der Vorrichtung analog zum vorstehend Beschriebenen erstreckt.

Gemäß einer weiteren bevorzugten Ausgestaltung kann die Vorrichtung einen an dem Drehkopf drehbar gelagerten zweiten Hubarm umfassen, an welchem der Aufnahmeabschnitt drehbar gelagert ist. Zudem kann die erfindungsgemäße Vorrichtung eine an dem ersten Hubarm und/oder dem zweiten Hubarm angeordnete Kameraaufnahmevorrichtung aufweisen, welche eingerichtet ist, eine Kamera aufzunehmen. In diesem Zusammenhang kann die Vorrichtung zudem eine der Kamera zugeordnete Leitung aufweisen, welche sich ausgehend vom Inneren der Basiseinheit bis zum Inneren der Kammeraufnahmevorrichtung innerhalb der Vorrichtung erstreckt.

Der zweite Hubarm kann mit dem ersten Hubarm über den Tragabschnitt verbunden sein. Ferner kann der zweite Hubarm eingerichtet sein, den Aufnahmeabschnitt zusätzlich drehbar zu lagern. Die vorzugsweise an beiden Hubarmen angeordnete Kameraaufnahmevorrichtung kann einen Bajonettverschluss aufweisen, mittels welchem die Kamera an der Kameraaufnahmevorrichtung aufnehmbar ist. Vorteilhafterweise ist die Kamera als Schwenkkamera ausgebildet, so dass von der Kamera größere Bereiche bei Kanalarbeiten der Vorrichtung erfasst werden können. Die der Kamera zugeordnete Leitung kann beispielsweise als Energieversorgungsleitung und/oder Datenübertragungsleitung ausgebildet sein. Die der Kamera zugeordnete Leitung kann sich ausgehend vom Inneren der Basiseinheit über den Drehkopf und den ersten Hubarm oder den zweiten Hubarm in die Kameraaufnahmevorrichtung erstrecken.

Dies bietet den Vorteil, dass die der Kamera zugeordnete Leitung besonders gut geschützt ist und nur gegenüber der besagten Leitung robustere Außenflächen von Komponenten der Vorrichtung, während der Kanalarbeiten mit in den Kanalrohrleitungen befindlichen Hindernissen in Berührung kommen. Zudem wird verhindert, dass sich die Vorrichtung während des Betriebes innerhalb der Kanalrohrleitungen an Hindernissen aufgrund außenliegender Kameraleitungen verfängt. Ferner ermöglicht die erfindungsgemäße Vorrichtung, dass mittels der Kamera, welche bevorzugt als Schwenkkamera ausgebildet ist, alle von der Kamera erfassbaren Bereiche überwacht werden können, ohne dass das Sichtfeld der Kamera durch konventionell angeordnete Kameraaußenleitungen zumindest teilweise verdeckt wird.

Der Drehkopf kann derart ausgestaltet sein, dass dieser in Bezug auf einen dem Drehkopf zugeordneten Drehwinkel stufenlos und/oder endlos um die dem Drehkopf zugeordnete Drehachse drehbar ist. Dazu kann der Drehkopf beispielsweise einen Schwenkantrieb mit Drehgeber umfassen. Der Schwenkantrieb kann derart ausgestaltet sein, dass der Drehkopf in positiver und negativer Drehrichtung drehbar ist.

Der Drehkopf kann zudem mehrere Schleifringe aufweisen, welche eingerichtet sind, einen Teilabschnitt der mit der Arbeitsvorrichtung verbindbaren Leitung und einen Teilabschnitt der der Kamera zugeordneten Leitung zu bilden. Dabei können die entsprechenden Schleifringe insbesondere innerhalb des Drehkopfes an zur Außenumfangsfläche des Drehkopfes angrenzenden Bereichen angeordnet sein.

Bei dieser Ausgestaltung können Teilbereiche des dem ersten Aktuator zugeordneten Arbeitskreislaufs und, sofern vorhanden, des dem zweiten Aktuator zugeordneten Arbeitskreislaufs zentral innerhalb des Drehkopfes hin zur sich entlang der Drehachse des Drehkopfes erstreckenden ersten Drehdurchführung verlaufen.

Der erste Aktuator ist erfindungsgemäß mittels einer zweiten Drehdurchführung am Drehkopf gelagert, welche einen Teilabschnitt des dem ersten Aktuator zugeordneten Arbeitskreislaufs bildet.

Im Falle der Ausgestaltung der Aktuatoren als Hydraulikzylinder kann der erste Hydraulikzylinder und der zweite Hydraulikzylinder jeweils mehrere Bohrungen umfassen. Insbesondere können die beiden Hydraulikzylinder jeweils eine sich im Wesentlichen zentral und axial verlaufende erste Hydraulikzylinderbohrung aufweisen, welche einen Drehdurchführungsaufnahmeabschnitt des entsprechenden Hydraulikzylinders durchdringt und mit einer Hydraulikflüssigkeitskammer des entsprechenden Hydraulikzylinders in Verbindung steht. Zudem können die beiden Hydraulikzylinder jeweils eine sich im Wesentlichen senkrecht zur ersten Hydraulikzylinderbohrung verlaufende zweite Hydraulikzylinderbohrung umfassen. Ferner können die Hydraulikzylinder jeweils eine sich im Wesentlichen parallel zur ersten Hydraulikzylinderbohrung erstreckende dezentral angeordnete dritte Hydraulikzylinderbohrung aufweisen. Zudem können die beiden Hydraulikzylinder jeweils eine sich im Wesentlichen senkrecht zur dritten Hydraulikzylinderbohrung erstreckende den Drehdurchführungsaufnahmeabschnitt verbindende vierte Hydraulikzylinderbohrung umfassen. Die zweiten und die vierten Hydraulikzylinderbohrung werden vorteilhafterweise an Außenumfangsflächen mittels geeigneten Dichtmitteln abgedichtet.

Alternativ kann anstelle der jeweiligen dritten Hydraulikzylinderbohrung der entsprechende Hydraulikzylinder auch eine sich parallel zur ersten Hydraulikzylinderbohrung erstreckende Ausnehmung aufweisen, welche eingerichtet ist, einen die dritte und vierte Hydraulikzylinderbohrung verbindenden Hydraulikschlauch aufzunehmen. Die Ausnehmung kann beispielsweise einen u-förmigen Querschnitt aufweisen. Im Falle einer Ausgestaltung mit besagter Ausnehmung bildet der entsprechende Hydraulikschlauch einen Teilabschnitt des dem ersten oder zweiten Hydraulikzylinder zugeordneten Hydraulikkreislaufes. Dabei erstreckt sich der besagte Hydraulikschlauch entlang der Ausnehmung innerhalb des entsprechenden Hydraulikzylinders und damit innerhalb der Vorrichtung. Bevorzugt kann die jeweilige Ausnehmung mit einem lösbaren Deckel versehen sein, so dass der jeweilige Hydraulikzylinder den aufgenommenen Hydraulikschlauch vollständig umschließt. Diese Ausgestaltung bietet den Vorteil einer verbesserten Wartungsmöglichkeit der Hydraulikzylinder.

Der dem ersten Hydraulikzylinder zugeordnete Hydraulikkreislauf kann in einen Vorlauf und einen Rücklauf unterteilbar sein. Der Vorlauf kann sich beispielsweise ausgehend vom Hydraulikflüssigkeitstank über eine Hydraulikflüssigkeitspumpe, ein entsprechendes Hydraulikventil, die erste Drehdurchführung, die zweite Drehdurchführung, und die erste Hydraulikzylinderbohrung des ersten Hydraulikzylinders bis in die Hydraulikflüssigkeitskammer des ersten Hydraulikzylinders erstrecken. Selbstverständlich kann der Vorlauf durch weitere hier nicht genannte zusätzliche Komponenten verlaufen. Der Rücklauf kann sich beispielsweise ausgehend von der zweiten Hydraulikzylinderbohrung, über die dezentral angeordnete dritte Hydraulikzylinderbohrung des ersten Hydraulikzylinders, die die dritte Hydraulikzylinderbohrung und den Drehdurchführungsaufnahmeabschnitt verbindende vierte Hydraulikzylinderbohrung, die zweite Drehdurchführung und die erste Drehdurchführung in den Hydraulikflüssigkeitstank erstrecken. Selbstverständlich kann auch der Rücklauf durch weitere hier nicht genannte zusätzliche Komponenten verlaufen.

Gemäß einer weiteren bevorzugten Ausgestaltung kann der zweite Aktuator, insbesondere der zweite Hydraulikzylinder, mittels einer dritten Drehdurchführung am Drehkopf gelagert sein, welche einen Teilabschnitt des dem zweiten Aktuator zugeordneten Arbeitskreislaufs bildet. Vorzugsweise kann der zweite Aktuator in diesem Zusammenhang entlang einer mit dem ersten Aktuator gemeinsamen Drehachse am Drehkopf gelagert sein.

Im Falle der Ausgestaltung der Aktuatoren als Hydraulikzylinder kann der dem zweiten Hydraulikzylinder zugeordnete Hydraulikkreislauf ebenfalls in einen Vorlauf und einen Rücklauf unterteilbar sein, wobei der Vorlauf und Rücklauf analog zum Vorlauf und Rücklauf des dem ersten Hydraulikzylinders zugeordneten Hydraulikkreislaufes ausgestaltet sein kann.

Mittels der vorstehend beschriebenen erfindungsgemäßen Ausgestaltung kann realisiert werden, dass der dem ersten Aktuator zugehörige Arbeitskreislauf und, sofern vorhanden, der dem zweiten Aktuator zugeordnete Arbeitskreislauf sich jeweils innerhalb der Vorrichtung erstrecken. Dadurch wird der den jeweiligen Aktuatoren zugeordnete Arbeitskreislauf vor Beschädigungen geschützt. Zudem kann sich die Vorrichtung während des Betriebs nicht an in Kanalrohrleitungen befindlichen Hindernissen infolge von außenliegenden konventionellen Hydraulikleitungen oder elektrischen Leitungen verfangen oder festfahren.

Der erste Hubarm weist erfindungsgemäß eine Längsbohrung auf, welche als Teilabschnitt der mit der Arbeitsvorrichtung verbindbaren Leitung ausgestaltet ist. Beispielsweise kann die Längsbohrung als Teilabschnitt einer pneumatischen Leitung ausgebildet sein. In diesem Fall ist die mit der Arbeitsvorrichtung verbindbare Leitung vollständig als pneumatische Leitung ausgebildet.

Alternativ ist die Längsbohrung auch derart ausgestaltet, dass die mit der Arbeitsvorrichtung verbindbare Leitung aufgenommen werden kann. In diesem Fall weist die Längsbohrung einen gegenüber der aufzunehmenden mit der Arbeitsvorrichtung verbindbaren Leitung größeren Querschnittsdurchmesser auf und die mit der Arbeitsvorrichtung verbindbare Leitung ist beispielsweise als elektrische Leitung ausgebildet. Alternativ zur Längsbohrung kann in diesem Zusammenhang der erste Hubarm auch entlang seiner Erstreckungsrichtung einen u-förmigen Querschnitt aufweisen. Bevorzugt kann ein mit am ersten Hubarm mittels Befestigungsmitteln befestigbarer Deckel angeordnet sein, um die mit die mit der Arbeitsvorrichtung verbindbare Leitung vor Beschädigungen während des Betriebs der Vorrichtung zu schützen. Diese Ausgestaltung bietet besondere Vorteile bei der Wartung der Hubarme.

Gemäß einer weiteren bevorzugten Ausgestaltung der erfindungsgemäßen Vorrichtung kann auch der zweite Hubarm eine Längsbohrung aufweisen, welche ausgestaltet ist, die der Kamera zugeordnete Leitung aufzunehmen. Auch der zweite Hubarm kann alternativ entlang seiner Erstreckungsrichtung mit u-förmigem Querschnitt und optional mit entsprechend ausgestaltetem lösbar befestigtem Deckel ausgestaltet sein.

Der Aufnahmeabschnitt kann mittels einer dritten Lagerungsdurchführung drehbar am ersten Hubarm gelagert sein. Je nach Ausgestaltung der erfindungsgemäßen Vorrichtung kann der Aufnahmeabschnitt zusätzlich auch am zweiten Hubarm gelagert sein. Die dritte Lagerungsdurchführung kann als Hohlkörper ausgebildet sein und eine oder mehrere Ausnehmungen aufweisen. Die dritte Lagerungsdurchführung und der Aufnahmeabschnitt sind bevorzugt derart ausgestaltet, dass der Aufnahmeabschnitt einen Schwenkwinkelbereich von bis zu 110° aufweist.

Vorteilhafterweise sind insbesondere Endbereiche der Hubarme derart ausgestaltet, dass sich innerhalb der Hubarme erstreckende Leitungen, insbesondere die mit der Arbeitsvorrichtung verbindbare Leitung und/oder die der Kamera zugeordnete Leitung, von der Vorrichtung vollständig umschlossen sind. Beispielsweise kann ein erster Endbereich des ersten Hubarms, welcher eingerichtet ist, die dritte Lagerungsdurchführung aufzunehmen, lediglich eine Öffnung aufweisen, durch welche die die Arbeitsvorrichtung verbindbare Leitung in die Lagerungsdurchführung geführt werden kann. Ebenfalls kann ein dem ersten Endbereich gegenüberliegender zweiter Endbereich des ersten Hubarms, welcher eingerichtet ist, eine erste Lagerungsdurchführung aufzunehmen, lediglich eine Öffnung aufweisen, durch welche die die Arbeitsvorrichtung verbindbare Leitung in die erste Lagerungsdurchführung geführt werden kann. Analog dazu kann der zweite Hubarm in einem Endbereich zur Aufnahme einer zweiten Lagerungsdurchführung und zur Führung der der Kamera zugeordneten Leitung ausgestaltet sein. Dadurch können die der Kamera zugeordnete Leitung und die mit der Arbeitsvorrichtung verbindbare Leitung insbesondere in Gelenkbereichen vor Beschädigungen geschützt werden.

Ein besonderes Ausführungsbeispiel der Erfindung wird im Folgenden anhand der begleitenden Zeichnungen näher erläutert. Es zeigen:
Fig. 1 eine perspektivische Ansicht der erfindungsgemäßen Vorrichtung für Kanalrohrarbeiten;
Fig. 2 eine Ansicht eines Längsschnittes ausgewählter Komponenten der erfindungsgemäßen Vorrichtung, wobei der Längsschnitt durch eine Drehachse eines Drehkopfes der Vorrichtung verläuft;
Fig. 3 eine perspektivische Ansicht eines Querschnitts ausgewählter Komponenten der erfindungsgemäßen Vorrichtung, wobei der Querschnitt durch eine Lagerung von zwei Hubarmen an dem Drehkopf verläuft;
Fig. 4 eine perspektivische Ansicht eines Querschnitts ausgewählter Komponenten der erfindungsgemäßen Vorrichtung, wobei der Querschnitt durch eine Lagerung von zwei Hydraulikzylindern an dem Drehkopf verläuft; und
Fig. 5 eine perspektivische Ansicht einer Komponente von Hydraulikzylindern der Vorrichtung, mit sichtbaren innenliegenden Konturlinien.

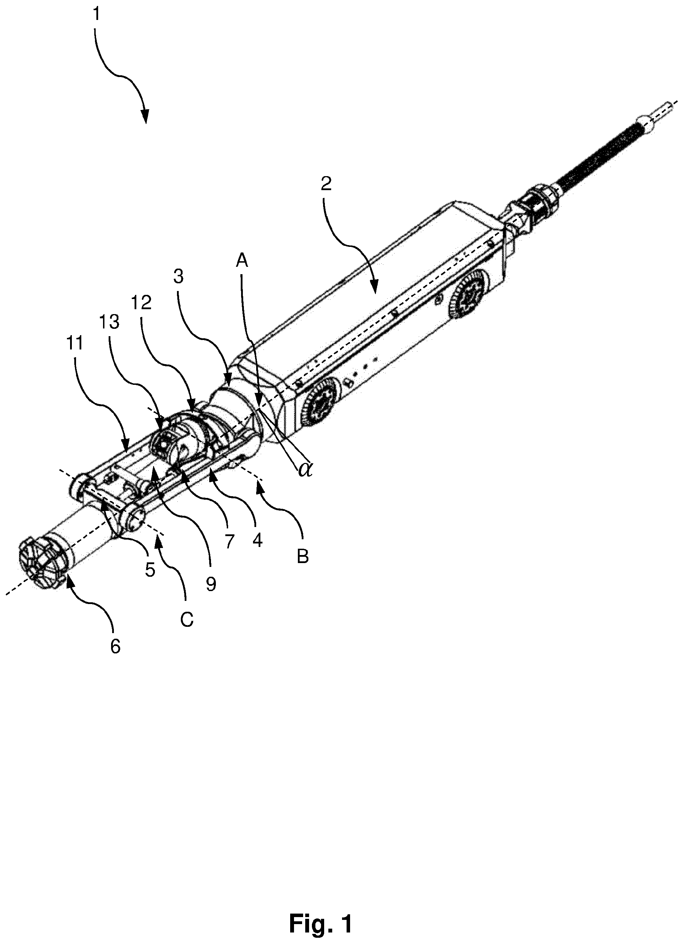

Wie in Fig. 1 dargestellt, umfasst die erfindungsgemäße Vorrichtung 1 eine Basiseinheit 2 und einen an der Basiseinheit 2 angeordneten Drehkopf 3. Der Drehkopf 3 ist um eine Drehachse A in Bezug auf einen Drehwinkel α stufenlos und endlos drehbar. Dazu weist der Drehkopf 3 einen innenliegenden nicht dargestellten Schwenkantrieb mit Drehgeber auf, welcher eingerichtet ist, den Drehkopf in positiver und negativer Drehrichtung um die Drehachse A zu drehen. Am Drehkopf sind ein erster Hubarm 4 und einen zweiter Hubarm 11 drehbar gelagert. Der erste Hubarm 4 und der zweite Hubarm 11 sind über eine Querstrebe miteinander verbunden. An beiden Hubarmem 4, 11 ist ein Aufnahmeabschnitt 5 drehbar gelagert, welcher eingerichtet ist eine Arbeitsvorrichtung 6 aufzunehmen. Vorliegend umfasst die Arbeitsvorrichtung 6 einen Fräskopf und einen zugehörigen Motor, welcher mit dem Aufnahmeabschnitt 5 lösbar verbunden ist. Die Arbeitsvorrichtung 6 kann selbstverständlich auch andere Werkzeuge, insbesondere einen Bohrer oder dergleichen, aufweisen. An beiden Hubarmen 4, 11 ist eine Kameraaufnahmevorrichtung 12 angeordnet, an welcher eine Schwenkkamera 13 über einen Bajonettverschluss befestigt ist. Am Drehkopf 3 sind ein erster Aktuator 7, welcher vorliegend ein erster Hydraulikzylinder 7 ist, und ein zweiter Aktuator 9, welcher vorliegend ein zweiter Hydraulikzylinder 9 ist, drehbar um eine gemeinsame Drehachse B gelagert. Der erste Hydraulikzylinder 7 ist mit der zwischen den Hubarmen 4, 11 angeordneten Querstrebe verbunden, um die Hubarme 4, 11 und damit den Aufnahmeabschnitt 5 und die Arbeitsvorrichtung 6 beispielsweise bei der in Fig. 1 dargestellten Stellung des Drehkopfes 3 nach oben und unten zu bewegen. Demgegenüber ist der zweite Hydraulikzylinder 9 mit dem Aufnahmeabschnitt 5 verbunden, um den Aufnahmeabschnitt 5 und damit die Arbeitsvorrichtung 6 in einem Schwenkbereich 110° um eine dem Aufnahmeabschnitt 5 zugehörige Drehachse C zu drehen.

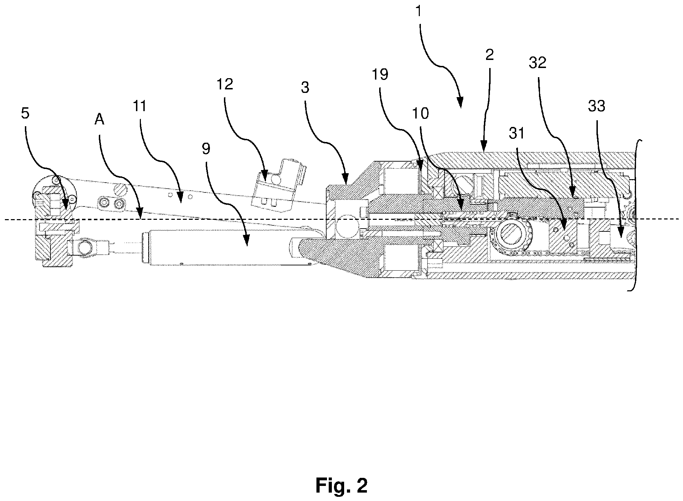

Der in Fig. 2 gezeigte Längsschnitt der Vorrichtung 1 zeigt beispielhaft ausgewählte Komponenten einer Hälfte der Vorrichtung 1. Wie aus Fig. 2 ersichtlich, ist innerhalb der Basiseinheit 2 eine sich entlang der Drehachse A erstreckende erste Drehdurchführung 10 angeordnet, welche jeweils einen Teilabschnitt eines dem ersten Hydraulikzylinders und des zweiten Hydraulikzylinders 9 zugehörigen Hydraulikkreislaufes bildet. Dazu umfasst die erste Drehdurchführung 10 einen zylindrischen Innenabschnitt und einen zylindrischen Außenabschnitt, welche sich jeweils entlang der Drehachse A des Drehkopfes 3 erstrecken. Der zylindrische Innenabschnitt der ersten Drehdurchführung 10 ist vorliegend statisch ausgebildet. In diesem Fall ist der zylindrische Außenabschnitt um die Drehachse A des Drehkopfes 3 drehbar. Der zylindrische Innenabschnitt umfasst entlang seiner Umfangsfläche mehrere Ausnehmungen, welche eingerichtet sind, Hydraulikflüssigkeit des dem ersten Hydraulikzylinder zugeordneten Hydraulikkreislaufes und des dem zweiten Hydraulikzylinder 9 zugeordneten Hydraulikkreislaufes zu transportieren. Zudem umfasst der zylindrische Innenabschnitt der ersten Drehdurchführung 10 mehrere mit den Ausnehmungen korrespondierende Bohrungen, welche ebenfalls eingerichtet sind, Hydraulikflüssigkeit des dem ersten Hydraulikzylinder zugeordneten Hydraulikkreislaufes und des dem zweiten Hydraulikzylinder 11 zugeordneten Hydraulikkreislaufes zu transportieren. Die Hydraulikkreisläufe umfassen einen gemeinsamen schlauchartig ausgeformten Hydrauliktank 33 zur Speicherung der Hydraulikflüssigkeit. Zudem weisen die Hydraulikkreislaufe eine gemeinsame Hydraulikpumpe 31 auf. Demgegenüber besitzt jeder Hydraulikkreislauf jeweils ein Hydraulikventil 32.

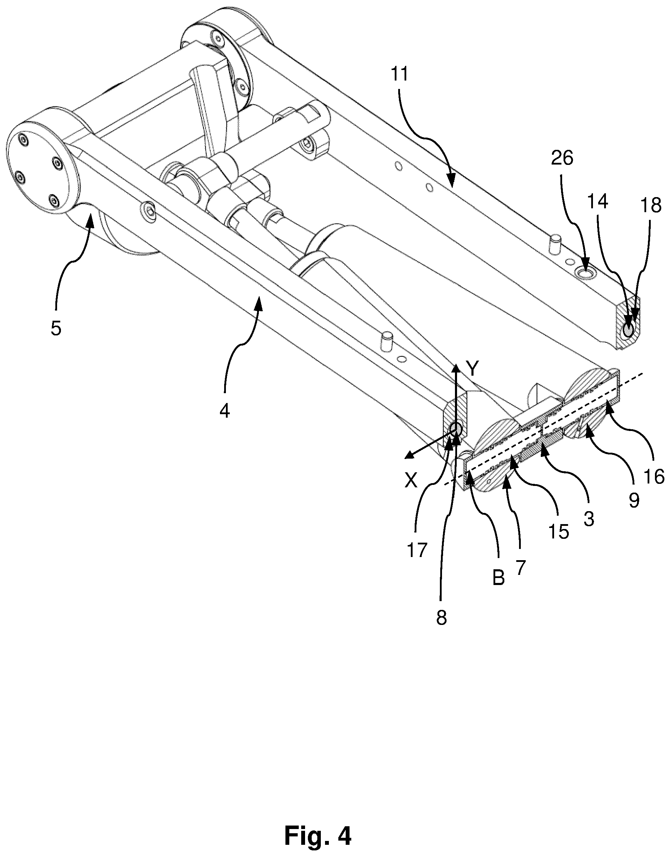

Wie in Zusammenschau der Fig. 1 bis Fig. 4 ersichtlich, sind innerhalb des Drehkopfes 3 an zur Außenumfangsfläche des Drehkopfes 3 angrenzenden Bereichen mehrere Schleifringe 19 angeordnet, welche eingerichtet sind, einen Teilabschnitt einer in Fig. 4 gezeigten mit der Arbeitsvorrichtung 6 verbindbaren Leitung 8 und einen Teilabschnitt einer in Fig. 4 gezeigten der Kamera 13 zugeordneten Leitung 14 zu bilden. Durch diese Ausgestaltung der Vorrichtung 1 und der Anordnung der ersten Drehdurchführung 10 kann jeweils ein innenliegender Verlauf der den beiden Hydraulikzylindern 7, 9 zugeordneten Hydraulikkreisläufen, der mit der Arbeitsvorrichtung verbindbaren Leitung 8 und der der Kamera zugeordneten Leitung 14 im Übergangsbereich zwischen Basiseinheit 2 und drehbarem Drehkopf 3 realisiert werden.

Wie in der Zusammenschau der Fig. 2 bis Fig. 4 ersichtlich, umfasst der Drehkopf 3 eine Vorlaufbohrung 21 und eine Rücklaufbohrung 22 des dem ersten Hydraulikzylinders 7 zugeordneten Hydraulikkreislaufes, welche mit der ersten Drehdurchführung 10 in Verbindung stehen. Zudem weist der Drehkopf 3 eine Vorlaufbohrung 23 und eine Rücklaufbohrung 24 des dem zweiten Hydraulikzylinders 9 zugeordneten Hydraulikkreislaufes, welche mit der ersten Drehdurchführung 10 in Verbindung stehen. Die Vorlaufbohrung 21 und die Rücklaufbohrung 22 des dem ersten Hydraulikzylinders 7 zugeordneten Hydraulikkreislaufes stehen mit einer zweiten Drehdurchführung 15 in Verbindung, welche den ersten Hydraulikzylinder 7 am Drehkopf 3 lagert. Die Vorlaufbohrung 23 und die Rücklaufbohrung 24 des dem zweiten Hydraulikzylinders 9 zugeordneten Hydraulikkreislaufes stehen mit einer dritten Drehdurchführung 16 in Verbindung, welche den zweiten Hydraulikzylinder 9 am Drehkopf 3 lagert.

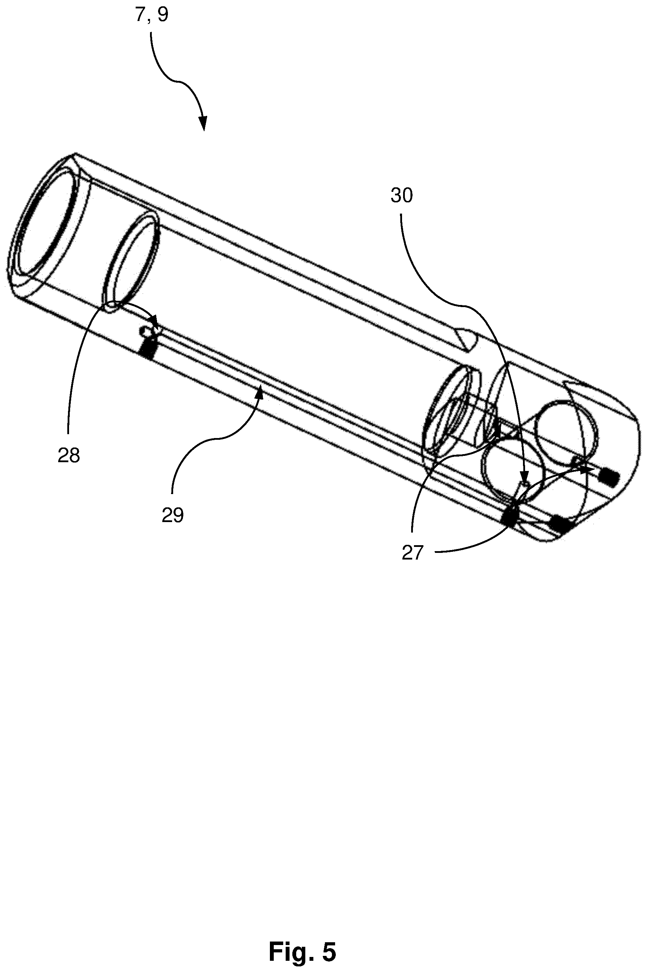

Wie in Fig. 5 gezeigt, umfassen die beiden Hydraulikzylinder 7, 9 jeweils eine sich im Wesentlichen zentral und axial verlaufende erste Hydraulikzylinderbohrung 27, welche einen Drehdurchführungsaufnahmeabschnitt des entsprechenden Hydraulikzylinders 7, 9 durchdringt und mit einer Hydraulikflüssigkeitskammer des entsprechenden Hydraulikzylinders 7, 9 in Verbindung steht. Zudem weisen die Hydraulikzylinder 7, 9 jeweils eine sich im Wesentlichen senkrecht zur ersten Hydraulikzylinderbohrung 27 verlaufende zweite Hydraulikzylinderbohrung 28 auf. Ferner umfassen die Hydraulikzylinder 7, 9 jeweils eine sich im Wesentlichen parallel zur ersten Hydraulikzylinderbohrung 27 erstreckende dezentral angeordnete dritte Hydraulikzylinderbohrung 29. Zudem weisen die beiden Hydraulikzylinder 7, 9 jeweils eine sich im Wesentlichen senkrecht zur dritten Hydraulikzylinderbohrung 29 erstreckende den Drehdurchführungsaufnahmeabschnitt verbindende vierte Hydraulikzylinderbohrung 30.

Wie aus den Figuren 2 bis 5 ersichtlich, ist der den beiden Hydraulikzylindern 7, 9 jeweils zugeordnete Hydraulikkreislauf in einen Vorlauf und einen Rücklauf unterteilt. Der jeweilige Vorlauf erstreckt sich ausgehend vom Hydrauliktank 33 über die Hydraulikpumpe 31, das entsprechende Hydraulikventil 32, die erste Drehdurchführung 10, die entsprechende Vorlaufbohrung 21 bzw. 23, die zweite Drehdurchführung 15 bzw. dritte Drehdurchführung 16, und die erste Hydraulikzylinderbohrung 27 bis in die Hydraulikflüssigkeitskammer des jeweiligen Hydraulikzylinders 7, 9. Selbstverständlich kann der Vorlauf durch weitere hier nicht genannte zusätzliche Komponenten verlaufen. Der Rücklauf verläuft ausgehend von der zweiten Hydraulikzylinderbohrung 28, über die dritte dezentral angeordnete Hydraulikzylinderbohrung 29, die die dritte Hydraulikzylinderbohrung 29 und den Drehdurchführungsaufnahmeabschnitt verbindende vierte Hydraulikzylinderbohrung 30, die zweite Drehdurchführung 15 bzw. die dritte Drehdurchführung 16, die entsprechende Rücklaufbohrung 22 bzw. 24 und die erste Drehdurchführung 10 in den Hydraulikflüssigkeitstank 33 erstrecken. Selbstverständlich kann auch der Rücklauf durch weitere hier nicht genannte zusätzliche Komponenten verlaufen.

Durch diese Ausgestaltung erstrecken sich die beiden Hydraulikkreisläufe innerhalb der Vorrichtung 1 und werden dadurch vor Beschädigungen geschützt. Zudem wird das Sichtfeld der in Fig. 1 gezeigten Kamera 13 nicht durch außenliegende konventionell verwendete Hydraulikschläuche beeinträchtigt.

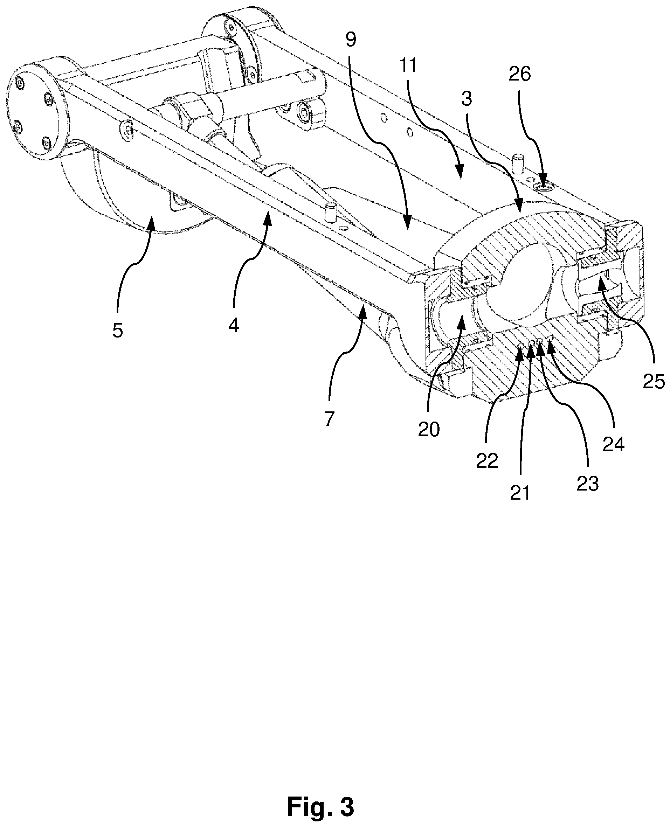

Wie in Zusammenschau der Fig. 1 bis Fig. 4 ersichtlich, ist der erste Hubarm 4 mittels einer ersten Lagerungsdurchführung 20 und der zweite Hubarm 11 mittels einer zweiten Lagerungsdurchführung 25 am Drehkopf 3 gelagert, wobei die beiden Lagerungsdurchführungen 20 bzw. 25 eingerichtet sind, die mit der Arbeitsvorrichtung 6 verbindbare Leitung 8 bzw. die der Kamera 13 zugeordnete Leitung 14 vom Drehkopf 3 in den ersten Hubarm 4 bzw. zweiten Hubarm 11 zu führen. Der erste Hubarm 4 weist eine Längsbohrung 17, welche die mit der Arbeitsvorrichtung 6 verbindbare Leitung 8 aufnimmt zu einer nicht dargestellten dritten Lagerungsdurchführung führt, mittels welcher die Aufnahmevorrichtung 5 am ersten Hubarm 4 gelagert ist. Die dritte Lagerungsdurchführung ist analog zur in Fig. 3 gezeigten ersten Lagerungsdurchführung 20 ausgestaltet. Zudem umfasst der zweite Hubarm 11 eine Längsbohrung 18 und eine Querbohrung 26, welche zusammen die der Kamera 13 zugeordnete Leitung 14 führen. Die in den Fig. 1 und Fig. 2 gezeigte Kameraaufnahmevorrichtung 12 weist eine mit der Querbohrung 26 korrespondierende nicht dargestellte Bohrung auf, so dass die der Kamera 13 zugeordnete Leitung 14 bis ins Innere der Kameraaufnahmevorrichtung 12 geführt werden kann, wo ein zur Verbindung mit der Kamera 13 nicht dargestellter Anschlussstecker angeordnet ist. Die mit der Arbeitsvorrichtung 6 verbindbare Leitung 8 erstreckt sich vorliegend, wie die beiden Hydraulikkreisläufe und die der Kamera 13 zugehörige Leitung 14, innerhalb der Vorrichtung 1, dergestalt, dass ein Querschnitt der Leitung 8 (eine X-Y-Schnittfläche) senkrecht zur Verlaufsrichtung in Bezug auf ein mit dem Querschnitt der Leitung 8 verbundenes kartesisches Koordinatensystem, dessen Nullpunkt im Mittelpunkt des Querschnitts der Leitung 8 liegt, aus vier Koordinatenrichtungen, von der Vorrichtung 1 umschlossen ist.

Durch diese Ausgestaltung erstrecken sich die mit der Arbeitsvorrichtung 6 verbindbare Leitung 8 und die der Kamera 13 zugeordnete Leitung 14 innerhalb der Vorrichtung 1 und werden dadurch vor Beschädigungen geschützt. Zudem wird das Sichtfeld der in Fig. 1 gezeigten Kamera 13 nicht durch außenliegende Leitungen beeinträchtigt.

### Bezugszeichenliste

- 1: Vorrichtung für Kanalrohrarbeiten
- 2: Basiseinheit
- 3: Drehkopf
- 4: erster Hubarm
- 5: Aufnahmeabschnitt
- 6: Arbeitsvorrichtung
- 7: erster Hydraulikzylinder / erster Aktuator
- 8: mit Arbeitsvorrichtung verbindbare Leitung
- 9: zweiter Hydraulikzylinder / zweiter Aktuator
- 10: erste Drehdurchführung
- 11: zweiter Hubarm
- 12: Kameraaufnahmevorrichtung
- 13: Kamera
- 14: der Kamera zugeordnete Leitung
- 15: zweite Drehdurchführung
- 16: dritte Drehdurchführung
- 17: Längsbohrung des ersten Hubarms
- 18: Längsbohrung des zweiten Hubarms
- 19: Schleifringe
- 20: erste Lagerungsdurchführung
- 21: im Drehkopf befindliche Vorlaufbohrung des ersten Hydraulikkreislaufes
- 22: im Drehkopf befindliche Rücklaufbohrung des ersten Hydraulikkreislaufes
- 23: im Drehkopf befindliche Vorlaufbohrung des zweiten Hydraulikkreislaufes
- 24: im Drehkopf befindliche Rücklaufbohrung des zweiten Hydraulikkreislaufes
- 25: zweite Lagerungsdurchführung
- 26: Querbohrung des zweiten Hubarms
- 27: erste Hydraulikzylinderbohrung
- 28: zweite Hydraulikzylinderbohrung
- 29: dritte Hydraulikzylinderbohrung
- 30: vierte Hydraulikzylinderbohrung
- 31: Hydraulikpumpe
- 32: Hydraulikventil
- 33: Hydrauliktank
- A: Drehachse des Drehkopfes
- B: Drehachse des ersten und des zweiten Hydraulikzylinders
- C: Drehachse des Aufnahmeabschnitts
- α: Drehwinkel

## Patentansprüche

1. Vorrichtung (1) für Kanalrohrarbeiten, insbesondere für Kanalrohrsanierungs- und Kanalrohrinspektionsarbeiten, umfassend:
eine in einem Kanalrohr bewegbare Basiseinheit (2);
einen an der Basiseinheit (2) angeordneten Drehkopf (3), welcher um eine dem Drehkopf (3) zugeordnete Drehachse (A) drehbar ist;
einen an dem Drehkopf (3) drehbar gelagerten ersten Hubarm (4);
einen an dem ersten Hubarm (4) drehbar gelagerten Aufnahmeabschnitt (5), welcher eingerichtet ist eine Arbeitsvorrichtung (6), insbesondere eine Fräse, aufzunehmen;
einen an dem Drehkopf (3) gelagerten ersten Aktuator (7) zum Bewegen des Aufnahmeabschnitts (5);
einen dem ersten Aktuator (7) zugeordneten Arbeitskreislauf; und
eine mit der Arbeitsvorrichtung (6) verbindbare Leitung (8);
wobei sich der dem ersten Aktuator (7) zugeordnete Arbeitskreislauf ausgehend vom Inneren der Basiseinheit (2) bis zum Inneren des ersten Aktuators (7) innerhalb der Vorrichtung (1) erstreckt,
**dadurch gekennzeichnet, dass**
innerhalb der Basiseinheit (2) eine dem Drehkopf (3) zugeordnete erste Drehdurchführung (10) angeordnet ist, welche einen Teilabschnitt des dem ersten Aktuators (7) zugeordneten Arbeitskreislaufs bildet,
dass der erste Aktuator (7) mittels einer zweiten Drehdurchführung (15) am Drehkopf (3) gelagert ist, welche einen Teilabschnitt des dem ersten Aktuator (7) zugeordneten Arbeitskreislaufes bildet,
dass sich die mit der Arbeitsvorrichtung (6) verbindbare Leitung (8) ausgehend vom Inneren der Basiseinheit (2) bis zum Inneren des Aufnahmeabschnitts (5) innerhalb der Vorrichtung (1) erstreckt, und
dass der erste Hubarm (4) eine Längsbohrung (17) aufweist, welche als Teilabschnitt der mit der Arbeitsvorrichtung (6) verbindbaren Leitung (8) ausgestaltet ist oder, welche ausgestaltet ist, die mit der Arbeitsvorrichtung (6) verbindbare Leitung (8) aufzunehmen.

2. Vorrichtung (1) nach Anspruch 1, weiter umfassend:
einen am Drehkopf (3) drehbar gelagerten zweiten Aktuator (9), welcher eingerichtet ist den Aufnahmeabschnitt (5) zu bewegen, und
einen dem zweiten Aktuator (9) zugeordneten Arbeitskreislauf,
wobei sich der dem zweiten Aktuator (9) zugeordnete Arbeitskreislauf ausgehend vom Inneren der Basiseinheit (3) bis zum Inneren des zweiten Aktuators (9) innerhalb der Vorrichtung (1) erstreckt.

3. Vorrichtung (1) nach Anspruch 2, sofern rückbezogen auf Anspruch 2, wobei die erste Drehdurchführung (10) zudem einen Teilabschnitt des dem zweiten Aktuators (9) zugeordneten Arbeitskreislaufs bildet.

4. Vorrichtung (1) nach einem der Ansprüche 1 bis 3, weiter umfassend:
einen an dem Drehkopf (3) drehbar gelagerten zweiten Hubarm (11), an welchem der Aufnahmeabschnitt (5) drehbar gelagert ist;
eine an dem ersten Hubarm (4) und/oder dem zweiten Hubarm (11) angeordnete Kameraaufnahmevorrichtung (12), welche eingerichtet ist eine Kamera (13) aufzunehmen; und
eine der Kamera (13) zugeordnete Leitung (14);
wobei sich die der Kamera (13) zugeordnete Leitung (14) ausgehend vom Inneren der Basiseinheit (2) bis zum Inneren der Kammeraufnahmevorrichtung (12) innerhalb der Vorrichtung (1) erstreckt.

5. Vorrichtung (1) nach einem der Ansprüche 1 bis 4, wobei der Drehkopf (3) in Bezug auf einen dem Drehkopf (3) zugeordneten Drehwinkel (α) stufenlos und/oder endlos um die dem Drehkopf (3) zugeordnete Drehachse (A) drehbar ist.

6. Vorrichtung (1) nach einem der Ansprüche 2 bis 5, wobei der zweite Aktuator (9) mittels einer dritten Drehdurchführung (16) am Drehkopf (3) gelagert ist, welche einen Teilabschnitt des dem zweiten Aktuator (9) zugeordneten Arbeitskreislaufs bildet, und optional, wobei der zweite Aktuator (9) entlang einer mit dem ersten Aktuator (7) gemeinsamen Drehachse (B) am Drehkopf (3) gelagert ist.

7. Vorrichtung (1) nach einem der Ansprüche 5 bis 6, wobei der zweite Hubarm (11) eine Längsbohrung (18) aufweist, welche ausgestaltet ist, die der Kamera (13) zugeordnete Leitung (14) aufzunehmen.

8. Vorrichtung (1) nach einem der Ansprüche 1 bis 7, wobei der erste Aktuator (7) ein erster Hydraulikzylinder (7) ist, und wobei der dem ersten Aktuator zugeordnete Arbeitskreislauf ein Hydraulikkreislauf ist, und optional, wobei der erste Hydraulikzylinder (7) mehrere Bohrungen aufweist, welche ausgestaltet sind, Teilabschnitte eines Vorlaufs oder eines Rücklaufs des dem ersten Hydraulikzylinder (7) zugeordneten Hydraulikkreislaufes zu bilden.

9. Vorrichtung (1) nach einem der Ansprüche 1 bis 8, sofern rückbezogen auf Anspruch 2, wobei der zweite Aktuator (9) ein zweiter Hydraulikzylinder (9) ist, und wobei der dem zweiten Aktuator zugeordnete Arbeitskreislauf ein Hydraulikkreislauf ist, und optional, wobei der zweite Hydraulikzylinder (9) mehrere Bohrungen aufweist, welche ausgestaltet sind, Teilabschnitte eines Vorlaufs und eines Rücklaufs des dem zweiten Hydraulikzylinder (9) zugeordneten Hydraulikkreislaufes zu bilden.

10. Vorrichtung (1) nach einem der Ansprüche 1 bis 9, wobei der Drehkopf (3) Schleifringe (19) umfasst, welche eingerichtet sind, einen Teilabschnitt der mit der Arbeitsvorrichtung (6) verbindbaren Leitung (8) zu bilden.

11. Vorrichtung (1) nach Anspruch 10, sofern rückbezogen auf einen der Ansprüche 5 bis 13, wobei einige der Schleifringe (19) eingerichtet sind, einen Teilabschnitt der der Kamera (15) zugeordneten Leitung (16) zu bilden.

12. Vorrichtung nach einem der Ansprüche 1 bis 11, wobei der Aufnahmeabschnitt (5) mittels einer dritten Lagerungsdurchführung am ersten Hubarm (4) gelagert ist.

## Claims

1. A device (1) for sewer pipe work, in particular for sewer pipe rehabilitation and sewer pipe inspection work, comprising:
a base unit (2) movable in a sewer pipe;
a rotary head (3) arranged on the base unit (2) and rotatable about an axis of rotation (A) associated with the rotary head (3);
a first lifting arm (4) rotatably mounted on the rotary head (3);
a receiving portion (5) rotatably mounted on the first lifting arm (4) and designed to receive a working device (6), in particular a milling cutter;
a first actuator (7), mounted on the rotary head (3), for moving the receiving portion (5);
a working circuit associated with the first actuator (7); and
a line (8) connectable to the working device (6);
wherein the working circuit associated with the first actuator (7) extends from the interior of the base unit (2) to the interior of the first actuator (7) within the device (1),
**characterized in that**
a first rotary feedthrough (10) associated with the rotary head (3), which forms a section of the working circuit associated with the first actuator (7), is arranged within the base unit (2),
the first actuator (7) is mounted on the rotary head (3) by means of a second rotary feedthrough (15) that forms a section of the working circuit associated with the first actuator (7),
the line (8) connectable to the working device (6) extends from the interior of the base unit (2) to the interior of the receiving portion (5) within the device (1), and
the first lifting arm (4) has a longitudinal bore (17) configured as a section of the line (8) connectable to the working device (6) or configured to receive the line (8) connectable to the working device (6).

2. The device (1) according to claim 1, further comprising:
a second actuator (9) rotatably mounted on the rotary head (3) and designed to move the receiving portion (5), and
a working circuit associated with the second actuator (9),
wherein the working circuit associated with the second actuator (9) extends from the interior of the base unit (3) to the interior of the second actuator (9) within the device (1).

3. The device (1) according to claim 2, if dependent on claim 2, wherein the first rotary feedthrough (10) additionally forms a section of the working circuit associated with the second actuator (9).

4. The device (1) according to one of claims 1 to 3, further comprising:
a second lifting arm (11) rotatably mounted on the rotary head (3) and on which the receiving portion (5) is rotatably mounted;
a camera receiving device (12) arranged on the first lifting arm (4) and/or the second lifting arm (11) and designed to hold a camera (13); and
a line (14) associated with the camera (13);
wherein the line (14) associated with the camera (13) extends from the interior of the base unit (2) to the interior of the camera receiving device (12) within the device (1).

5. The device (1) according to one of claims 1 to 4, wherein the rotary head (3), with respect to a rotation angle (α) associated with the rotary head (3), is continuously and/or endlessly rotatable about the axis of rotation (A) associated with the rotary head (3).

6. The device (1) according to one of claims 2 to 5, wherein the second actuator (9) is mounted on the rotary head (3) by means of a third rotary feedthrough (16) that forms a section of the working circuit associated with the second actuator (9), and optionally, wherein the second actuator (9) is mounted on the rotary head (3) along an axis of rotation (B) shared with the first actuator (7).

7. The device (1) according to one of claims 5 to 6, wherein the second lifting arm (11) has a longitudinal bore (18) configured to receive the line (14) associated with the camera (13).

8. The device (1) according to one of claims 1 to 7, wherein the first actuator (7) is a first hydraulic cylinder (7), and wherein the working circuit associated with the first actuator is a hydraulic circuit, and optionally, wherein the first hydraulic cylinder (7) has a plurality of bores configured to form sections of a supply line or a return line of the hydraulic circuit associated with the first hydraulic cylinder (7).

9. The device (1) according to one of claims 1 to 8, if dependent on claim 2, wherein the second actuator (9) is a second hydraulic cylinder (9), and wherein the working circuit associated with the second actuator is a hydraulic circuit, and optionally, wherein the second hydraulic cylinder (9) has a plurality of bores configured to form sections of a supply line and a return line of the hydraulic circuit associated with the second hydraulic cylinder (9).

10. The device (1) according to one of claims 1 to 9, wherein the rotary head (3) comprises slip rings (19) designed to form a section of the line (8) connectable to the working device (6).

11. The device (1) according to claim 10, if dependent on one of claims 5 to 13, wherein some of the slip rings (19) are designed to form a section of the line (16) associated with the camera (15).

12. The device according to one of claims 1 to 11, wherein the receiving portion (5) is mounted on the first lifting arm (4) by means of a third bearing feedthrough.

## Revendications

1. Dispositif (1) pour des travaux de canalisation, notamment pour des travaux d'assainissement de canalisation et d'inspection de canalisation, comprenant :
une unité de base (2) pouvant être déplacée dans une canalisation ;
une tête rotative (3) disposée sur l'unité de base (2) qui est rotative autour d'un axe de rotation (A) associé à la tête rotative (3) ;
un premier bras de levage (4) logé à rotation sur la tête rotative (3) ;
une section de réception (5) logée à rotation sur le premier bras de levage (4) qui est configurée pour recevoir un dispositif de travail (6), notamment une fraise ;
un premier actionneur (7) logé sur la tête rotative (3) pour le déplacement de la section de réception (5) ;
un circuit de travail associé au premier actionneur (7) ; et
une conduite (8) pouvant être connectée au dispositif de travail (6) ;
dans lequel le circuit de travail associé au premier actionneur (7) s'étend au sein du dispositif (1) en partant de l'intérieur de l'unité de base (2) jusqu'à l'intérieur du premier actionneur (7),
**caractérisé en ce que**
un premier passage rotatif (10) associé à la tête rotative (3) est disposé au sein de l'unité de base (2), lequel forme une section partielle du circuit de travail associé au premier actionneur (7),
que le premier actionneur (7) est logé sur la tête rotative (3) au moyen d'un deuxième passage rotatif (15), lequel forme une section partielle du circuit de travail associé au premier actionneur (7),
que la conduite (8) pouvant être connectée au dispositif de travail (6) s'étend au sein du dispositif (1) en partant de l'intérieur de l'unité de base (2) jusqu'à l'intérieur de la section de réception (5), et
que le premier bras de levage (4) présente un alésage longitudinal (17) qui est réalisé en tant que section partielle de la conduite (8) pouvant être connectée au dispositif de travail (6) ou qui est réalisé pour recevoir la conduite (8) pouvant être connectée au dispositif de travail (6).

2. Dispositif (1) selon la revendication 1, comprenant en outre :
un second actionneur (9) logé à rotation sur la tête rotative (3) qui est configuré pour déplacer la section de réception (5), et
un circuit de travail associé au second actionneur (9),
dans lequel le circuit de travail associé au second actionneur (9) s'étend au sein du dispositif (1) en partant de l'intérieur de l'unité de base (3) jusqu'à l'intérieur du second actionneur (9).

3. Dispositif (1) selon la revendication 2, dans la mesure où elle se réfère à la revendication 2, dans lequel le premier passage rotatif (10) forme en outre une section partielle du circuit de travail associé au second actionneur (9).

4. Dispositif (1) selon une des revendications 1 à 3, comprenant en outre :
un second bras de levage (11) logé à rotation sur la tête rotative (3) sur lequel la section de réception (5) est logée à rotation ;
un dispositif de réception de caméra (12) disposé sur le premier bras de levage (4) et/ou le second bras de levage (11) qui est configuré pour recevoir une caméra (13) ; et
une conduite (14) associée à la caméra (13) ;
dans lequel la conduite (14) associée à la caméra (13) s'étend au sein du dispositif (1) en partant de l'intérieur de l'unité de base (2) jusqu'à l'intérieur du dispositif de réception de caméra (12).

5. Dispositif (1) selon une des revendications 1 à 4, dans lequel la tête rotative (3) peut être tournée en continu et/ou sans fin autour de l'axe de rotation (A) associé à la tête rotative (3) par rapport à un angle de rotation (α) associé à la tête rotative (3).

6. Dispositif (1) selon une des revendications 2 à 5, dans lequel le second actionneur (9) est logé sur la tête rotative (3) au moyen d'un troisième passage rotatif (16), lequel forme une section partielle du circuit de travail associé au second actionneur (9), et en option, dans lequel le second actionneur (9) est logé sur la tête rotative (3) le long d'un axe de rotation (B) commun avec le premier actionneur (7).

7. Dispositif (1) selon une des revendications 5 à 6, dans lequel le second bras de levage (11) présente un alésage longitudinal (18) qui est réalisé pour recevoir la conduite (14) associée à la caméra (13).

8. Dispositif (1) selon une des revendications 1 à 7, dans lequel le premier actionneur (7) est un premier cylindre hydraulique (7), et dans lequel le circuit de travail associé au premier actionneur est un circuit hydraulique, et en option, dans lequel le premier cylindre hydraulique (7) présente plusieurs alésages qui sont réalisés pour former des sections partielles d'une avance ou d'un retour du circuit hydraulique associé au premier cylindre hydraulique (7).

9. Dispositif (1) selon une des revendications 1 à 8, dans la mesure où elle se réfère à la revendication 2, dans lequel le second actionneur (9) est un second cylindre hydraulique (9), et dans lequel le circuit de travail associé au second actionneur est un circuit hydraulique, et en option, dans lequel le second cylindre hydraulique (9) présente plusieurs alésages qui sont réalisés pour former des sections partielles d'une avance et d'un retour du circuit hydraulique associé au second cylindre hydraulique (9).

10. Dispositif (1) selon une des revendications 1 à 9, dans lequel la tête rotative (3) comprend des anneaux glissants (19) qui sont configurés pour former une section partielle de la conduite (8) pouvant être connectée au dispositif de travail (6).

11. Dispositif (1) selon la revendication 10, dans la mesure où elle se réfère à une des revendications 5 à 13, dans lequel quelques-uns des anneaux glissants (19) sont configurés pour former une section partielle de la conduite (16) associée à la caméra (15).

12. Dispositif selon une des revendications 1 à 11, dans lequel la section de réception (5) est logée sur le premier bras de levage (4) au moyen d'un troisième passage de logement.
